# EUROPEAN PATENT SPECIFICATION

(11) **EP 0 443 437 B1**
(45) Date of publication and mention of the grant of the patent: **27.05.1998**
(21) Application number: 91102079.0
(22) Date of filing: 14.02.1991
(51) Int. Cl.: G06F 17/50

(54) **Method of supporting design of cooling circuit of mold**
Verfahren zum Unterstützungsentwurf eines Kühlkreises in einer Form
Méthode d'aide à la conception de circuit de refroidissement dans un moule

(30) Priority: 19.02.1990 JP 37616/90
(43) Date of publication of application: 28.08.1991
(73) Proprietor: MATSUSHITA ELECTRIC INDUSTRIAL CO., LTD., Kadoma-shi, Osaka-fu, 571 (JP)
(72) Inventor: Yoshioka, Taijiro, Ooji-cho, Kitakatsuragi-gun, Nara-ken (JP)
(74) Representative: Eisenführ, Speiser & Partner

(56) References cited:
- EP-A- 0 246 559
- US-A- 4 740 018
- IEEE COMPINT COMPUTER AIDED TECHNOLOGIES 9 September 1985, MONTREAL QUEBEC CANADA pages 96 - 102 WADA ET AL 'a knowledge based approach to automated pipe-route planning in three-dimensional plant layout design'

## Description

### BACKGROUND OF THE INVENTION

The present invention relates to a method of supporting design in which a cooling circuit of a block of rectangular parallelopiped such as a mold, a manifold, etc. is designed by using CAD (computer-aided design).

In design in which a number of straight holes acting as a cooling circuit or the like are arranged in a block such as a mold, a manifold, etc., known CAD systems merely formulate and arrange graphic forms of the straight holes and have not been capable of checking validity of the design results. Especially, in the case where the cooling circuit is made structurally complicated in order to raise its cooling efficiency, such cases frequently occur that the design results run counter to the design objectives.

### SUMMARY OF THE INVENTION

Accordingly, an essential object of the present invention is to not only support a designer who arranges a number of straight holes acting as a cooling circuit or the like, in a block such as a mold, a manifold, etc. but detect, as a function of CAD, improper connections of the cooling circuit.

In order to accomplish this object of the present invention, there is provided a method of supporting design in which a plurality of elongated straight holes acting as a water or air cooling circuit are arranged in a block of rectangular parallelopiped such as a mold, a manifold, etc. by using computer-aided design, according to the present invention, the method comprising the steps of:
arranging the straight holes one by one by interactively determining a location, a direction, a diameter and a depth of each of the straight holes on a screen of a computer; formulating a directed tree diagram of the cooling circuit from an inlet of the cooling circuit through automatic recognition of intersection among the arranged straight holes; and
automatically detecting the presence of a branch in said tree, having two or more forks, or an endpoint of said tree, that is not an outlet indicated by the designer, and signaling this detection to the designer as an error in the design of the cooling circuit.

When the cooling circuit of the mold or the like is designed by using CAD in accordance with the present invention, the designer arranges the straight holes one by one by interactively determining a location and a depth of each of the straight holes on the screen of the computer. Thus, intersection among the arranged straight holes is automatically recognized and it becomes possible to automatically detect errors in design of the cooling circuit from the directed tree diagram formulated from the inlet of the cooling circuit.

### BRIEF DESCRIPTION OF THE DRAWINGS

This object and features of the present invention will become apparent from the following description taken in conjunction with the preferred embodiment thereof with reference to the accompanying drawings, in which:
Fig. 1 is a view explanatory of one example of definition of a mold block on a screen of a computer;
Fig. 2 is a view explanatory of one example of arrangement of straight holes in the mold block of Fig. 1;
Fig. 3 is a diagram explanatory of a network of three-dimensional straight holes;
Fig. 4 is a view explanatory of a tree structure of the straight holes of Fig. 3;
Fig. 5 is a diagram showing one example of an improper location in the tree structure of Fig. 4; and
Fig. 6 is a front elevational view of a mold block in which a malfunction of its cooling circuit has been detected automatically by a method of the present invention.

### DETAILED DESCRIPTION OF THE INVENTION

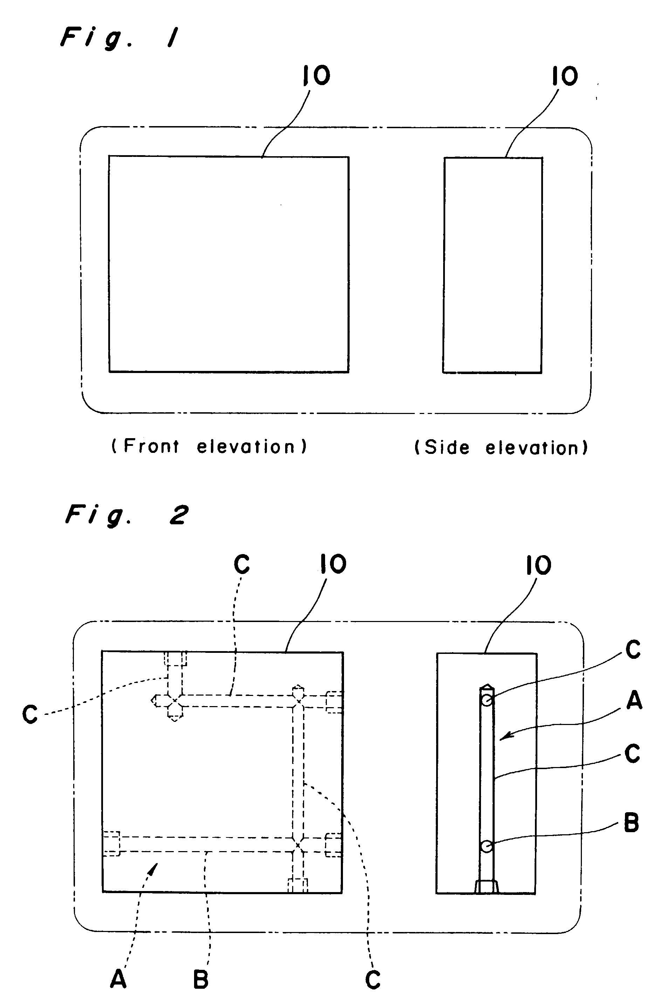

Hereinbelow, a method according to one embodiment of the present invention is described with reference to Figs. 1 to 5.

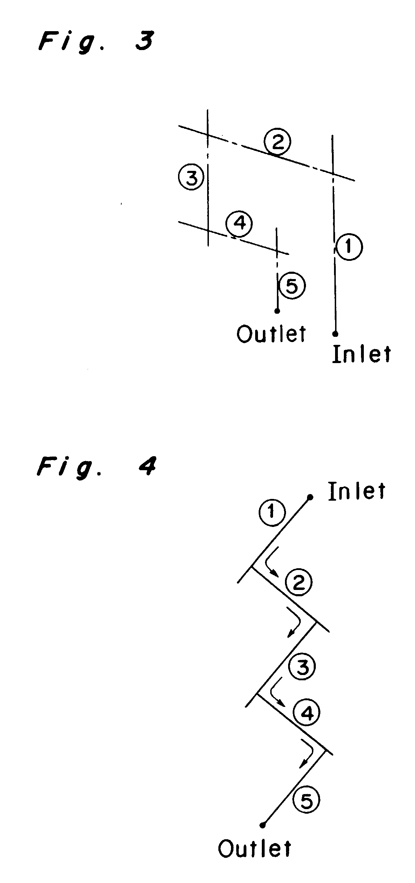

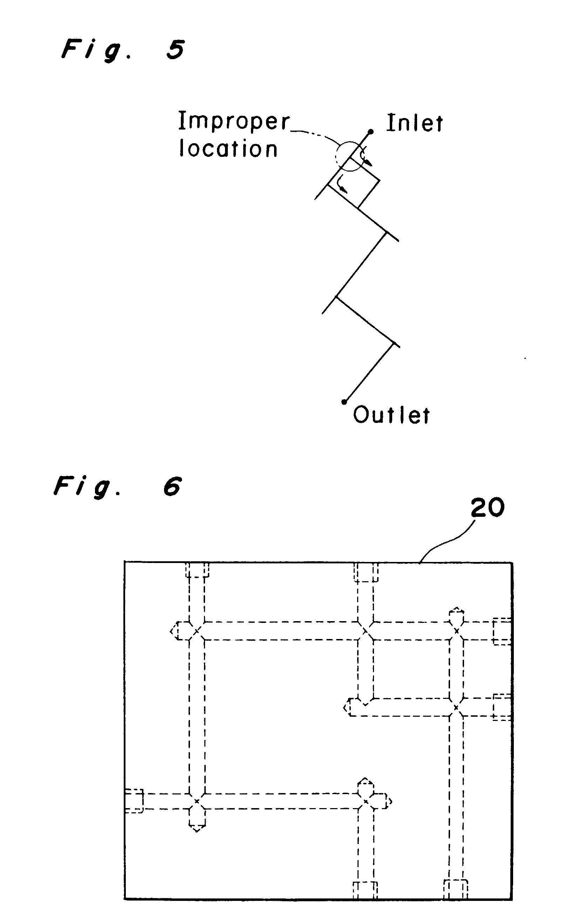

Design in which a number of elongated straight holes A acting as water or air passages are complicatedly arranged in a block 10 of rectangular parallelopiped such as a mold, a manifold, etc. by using CAD is performed in the following sequence (1) to (3) so as to detect errors in design.
(1) Function of defining the mold block 10
   The mold block 10 to be formed with the straight holes A acting as a cooling circuit or the like is defined as a structure of a continuous graphic form in coordinate systems of its front elevation and side elevation, respectively on a screen of a computer. Fig. 1 shows one example in which the mold block 10 is defined by using a loop solid. In Fig. 1, left and right rectangles shown in solid lines and enclosed by a two-dot chain line are a front elevational view and a side elevational view of the mold block 10, respectively.
(2) Arrangement of the straight holes A
   As shown in Fig. 2, the straight holes A include one through-hole B and three blind holes C. In Fig. 2, left and right rectangles shown in solid lines and enclosed by a two-dot chain line correspond to those of Fig. 1, respectively. In Fig. 2, arrangement of the straight holes A is performed by inputting a position of an end of each of the straight holes A, a diameter and a direction of each of the straight holes A in the left rectangle (front elevation) and a height of each of the straight holes A in the right rectangle (side section). In Fig. 2, the straight holes A which intersect with each other in the left rectangle and have an identical height in the right rectangle are connected with each other. An open end of each of the straight holes A is formed with a thread for receiving a circuit member such as a plug, a pipe, etc.
   As shown in Fig. 3, arrangement of the straight holes A can be performed in a two-dimensional plane but results of arrangement of the straight holes A are expressed by a three-dimensional network diagram. When a designer indicates an inlet and an outlet of the cooling circuit on the screen of the computer in this state, a tree structure is produced as data of the computer as shown in Fig. 4.
(3) In the tree structure of the straight holes A acting as the cooling circuit, when a branch has two or more forks as shown in Fig. 5 and when a final point obtained by tracing the tree in a deeper direction is not a point of the outlet indicated by the designer, design of the cooling circuit is judged as being erroneous. In this case, this error is clearly displayed on the screen such that the designer is informed of the error.

By graphically displaying the cooling circuit from its inlet as described above, errors in design can be found easily.

Fig. 6 shows one example of a cooling circuit of a mold block 20, in which an improper location has been detected by the method of the present invention.

In accordance with the present invention, in the case where a number of the elongated straight holes acting as the water or air cooling circuit are complicatedly formed in the block of rectangular parallelopiped such as a mold, a manifold, etc. by using CAD, errors in design can be found easily by graphically displaying the cooling circuit from its inlet. Consequently, design of the cooling circuit of the mold, etc. by the use of CAD can be performed easily and positively.

Although the present invention has been fully described by way of example with reference to the accompanying drawings, it is to be noted here that various changes and modifications within the scope of the appended claims will be apparent to those skilled in the art.

## Claims

1. A method of supporting design in which a plurality of elongated straight holes (A) acting as a water or air cooling circuit are arranged in a block (10), having the form of a rectangular parallelopiped, such as a mold, manifold, etc by using computer aided design, the method comprising the steps of:
arranging the straight holes (A) one by one by interactively determining a location, a direction, a diameter and a depth of each of the straigt holes (A) on a screen of a computer;
formulating a directed tree diagram of the cooling circuit from an inlet of the cooling circuit through automatic recognition of intersections among the arranged straigt holes (A); and
automatically detecting the presence of a branch in said tree, having two or more forks, or an endpoint of said tree, that is not an outlet indicated by the designer, and signalling this detection to the designer as an error in the design of the cooling circuit.

2. A method as claimed in claim 1, wherein the straight holes (A) include at least one through-hole (B) and at least one blind hole (C).

## Patentansprüche

1. Verfahren zur Unterstützung eines Entwurfs, in dem mehrere sehr lange, gerade Löcher (A), die als Wasser- oder Luftkühlkreis fungieren, in einem Block (10) angeordnet werden, welcher die Form eines rechteckigen Parallelepipeds aufweist, wie beispielsweise eine Gußform, eine Rohrverzweigung, usw., durch Benutzen von CAD (computer aided design), wobei das Verfahren folgende Schritte umfaßt:
Anordnen der geraden Löcher (A), wobei für eines nach dem anderen, interaktiv eine Position, eine Ausrichtung, ein Durchmesser und eine Tiefe für jedes der geraden Löcher (A) auf dem Bildschirm eines Computers festgelegt wird;
Erstellen eines gerichteten Graphen des Kühlkreises von einem Einlaß des Kühlkreises durch automatische Erkennung von Kreuzungen zwischen den angeordneten geraden Löchern (A); und
automatisches Entdecken der Existenz einer Kante des Graphen mit zwei oder mehr Abzweigungen, oder eines Endknotens des Graphen, der nicht durch den Entwickler als Auslaß gekennzeichnet ist; und
Anzeigen der Entdeckung an den Entwickler als einen Fehler im Entwurf des Kühlkreises.

2. Verfahren nach Anspruch 1,
dadurch gekennzeichnet, daß die geraden Löcher (A) mindestens ein durchgehendes Loch (B) und mindestens ein blindes Loch (C) einschließen.

## Revendications

1. Méthode d'aide à la conception dans laquelle on ménage une pluralité de perçages droits allongés (A) faisant office de circuit de refroidissement à eau ou à air, dans un bloc (10) ayant la forme d'un parallélépipède rectangulaire, tel qu'un moule, un collecteur, etc., en utilisant une conception assistée par ordinateur, la méthode comprenant les étapes consistant à :
- agencer les perçages droits (A) un par un en déterminant de manière interactive un emplacement, une direction, un diamètre et une profondeur de chacun des perçages droits (A) sur un écran d'ordinateur ;
- formuler un diagramme d'arborescence dirigé du circuit de refroidissement depuis une entrée du circuit de refroidissement par reconnaissance automatique des intersections parmi les perçages droits ménagés (A) ; et
- détecter automatiquement la présence d'une branche dans ladite arborescence, comportant deux fourches ou plus, ou un point d'extrémité de ladite arborescence, c'est-à-dire non pas une sortie indiquée par le concepteur, et pour signaler automatiquement cette détection au concepteur en tant qu'erreur dans la conception du circuit de refroidissement.

2. Méthode selon la revendication 1, dans laquelle les perçages droits (A) incluent au moins un perçage traversant (B) et au moins un perçage borgne (C).
